(19) Europäisches Patentamt / European Patent Office / Office européen des brevets

(11) **EP 4 409 943 B1**

(12) **EUROPEAN PATENT SPECIFICATION**

(45) Date of publication and mention
of the grant of the patent:
**29.04.2026 Bulletin 2026/18**

(21) Application number: **22875143.4**

(22) Date of filing: **30.09.2022**

(51) International Patent Classification (IPC):
*H04W 72/0446* (2023.01)   *H04L 5/00* (2006.01)
*H04W 74/0808* (2024.01)   *H04W 76/14* (2018.01)
*H04W 92/18* (2009.01)   *H04W 84/00* (2009.01)
*H04W 4/40* (2018.01)   *H04W 72/02* (2009.01)
*H04W 76/28* (2018.01)

(52) Cooperative Patent Classification (CPC):
**H04L 5/003; H04L 5/0094; H04W 72/02;**
**H04W 76/14; H04W 92/18;** H04W 4/40;
H04W 76/28

(86) International application number:
**PCT/CN2022/123128**

(87) International publication number:
**WO 2023/051762 (06.04.2023 Gazette 2023/14)**

(54) **SIDELINK COMMUNICATION METHOD AND TERMINAL DEVICE**

SIDELINK-KOMMUNIKATIONSVERFAHREN UND ENDGERÄTEVORRICHTUNG

PROCÉDÉ DE COMMUNICATION EN LIAISON LATÉRALE ET DISPOSITIF TERMINAL

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **30.09.2021 US 202163250667 P**

(43) Date of publication of application:
**07.08.2024 Bulletin 2024/32**

(73) Proprietor: **GUANGDONG OPPO MOBILE**
**TELECOMMUNICATIONS**
**CORP., LTD.**
**Dongguan, Guangdong 523860 (CN)**

(72) Inventor: **LIN, Huei-ming**
**Taipei, Taiwan 111 (TW)**

(74) Representative: **Taor, Simon Edward William et al**
**Venner Shipley LLP**
**200 Aldersgate**
**London EC1A 4HD (GB)**

(56) References cited:
**CN-A- 110 972 102    US-A1- 2020 374 861**

- **"3rd Generation Partnership Project; Technical Specification Group Radio Access Network; NR; Physical layer procedures for data (Release 16)",** vol. RAN WG1, no. V16.6.0, 30 June 2021 (2021-06-30), pages 1 - 172, XP052029956, Retrieved from the Internet <URL:https://ftp.3gpp.org/Specs/archive/38_series/38.214/38214-g60.zip 38214-g60.docx> [retrieved on 20210630]
- **MODERATOR (OPPO): "FL summary for AI 8.11.1.1 - resource allocation for power saving (before 3rd check point)", 3GPP TSG RAN WG1 #106-E, R1-2108264, 27 August 2021 (2021-08-27), XP052042731**
- **MODERATOR (OPPO): "FL summary for AI 8.11.1.1 - resource allocation for power saving (before 1st check point)", 3GPP TSG RAN WG1 #106-E, R1-2108262, 18 August 2021 (2021-08-18), XP052042091**
- **MODERATOR (OPPO): "FL summary for AI 8.11.1.1 - resource allocation for power saving (before 2nd check point)", 3GPP TSG RAN WG1 #106-E, R1-2108263, 26 August 2021 (2021-08-26), XP052042588**

EP 4 409 943 B1

• **MODERATOR (OPPO): "FL summary for AI 8.11.1.1 - resource allocation for power saving (EOM)", 3GPP TSG RAN WG1 #106-E, R1-2108265, 27 August 2021 (2021-08-27), XP052042732**

**Description**

**CROSS-REFERENCE TO RELATED APPLICATION**

This application claims the benefit of priority to U.S. Provisional Patent Application No. 63/250,667 filed September 30, 2021, entitled "METHODS FOR TIME-BASED RESOURCE SELECTION IN SIDELINK COMMUNICATION".

**TECHNICAL FIELD**

Embodiments of the present disclosure generally relate to communication technologies, and more particularly, to a sidelink communication method, a terminal device, a chip and computer-readable storage medium.

**BACKGROUND**

Communication architectures such as Device to Device (D2D), Vehicle to Vehicle (V2V), and Vehicle to Everything (V2X) can be implemented based on Sidelink (SL) technology. The communication between them is different from the way in which the communication data is received or sent by the base station in the traditional cellular system. This direct communication method between terminals has higher spectral efficiency and lower transmission delay. For a terminal in this direct communication mode, how to select resources to improve communication reliability is a technical problem to be solved in this application.

Related ground may be found in Moderator (OPPO): "FL summary for AI 8.11.1.1 - resource allocation for power saving (EOM)", 3GPP TSG RAN WG1 #106-E, R1-2108265, 27 August 2021, and "3rd Generation Partnership Project; Technical Specification Group Radio Access Network; NR; Physical layer procedures for data (Release 16)", 3GPP STANDARD; TECHNICAL SPECIFICATION; 3GPP TS 38.214, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. V16.6.0 30 June 2021 (2021-06-30), pages 1-172.

**SUMMARY**

The invention is set out in the appended set of claims.

Embodiments of the present disclosure provide a method for sidelink communication, terminal devices, and computer-readable storage medium.

According to a first aspect being part of the invention, there is provided a sidelink communication method as set out in claim 1.

According to a second aspect not being part of the invention, there is provided a terminal device configured to perform the method according to the first aspect or any implementation of the first aspect.

Specifically, the terminal device includes functional modules configured to perform the method according to the first aspect or any implementation of the first aspect.

According to a third aspect being part of the invention, there is provided a terminal device including a processor and a memory configured to store a computer program, where the processor is used to call and run the computer program stored in the memory to perform the method according to the first aspect or any implementation of the first aspect.

According to a fourth aspect being part of the invention, there is provided a chip configured to perform the method according to the first aspect or any implementation of the first aspect.

Specifically, the chip includes a processor configured to call and run a computer program stored in a memory to cause a device in which the chip is installed to perform the method according to the first aspect or any implementation of the first aspect.

According to a fifth aspect being part of the invention, there is provided a computer-readable storage medium configured to store a computer program, where the computer program is configured to cause a computer to perform the method according to the first aspect or any implementation of the first aspect.

According to a sixth aspect not being part of the invention, there is provided a computer program product including computer program instructions that cause a computer to perform the method according to the first aspect or any implementation of the first aspect.

According to a seventh aspect not being part of the invention, there is provided a computer program. When the computer program is run on a computer, the computer is caused to perform the method according to the first aspect or any implementation of the first aspect.

## BRIEF DESCRIPTION OF THE DRAWINGS

The accompanying drawings, which are incorporated herein and form a part of the specification, illustrate embodiments and examples of the present disclosure and, together with the description, further serve to explain the principles of the present disclosure and to enable a person skilled in the pertinent art to make and use the present disclosure.

FIG. 1 and FIG. 2 are schematic diagrams of application scenarios according to some embodiments of the present disclosure.

FIG. 3 is a flowchart of the SL communication method being part of the invention.

FIG. 4 is a schematic diagram illustrating a time domain structure of the RSW according to some embodiments of the present disclosure.

FIG. 5 is a schematic diagram illustrating a time domain structure of the RSW according to some other embodiments of the present disclosure.

FIG. 6 is a flow chart of determining the RSW based on the second priority order according to some embodiments of the present disclosure.

FIG. 7 is a flow chart of determining the RSW based on the first priority order according to some embodiments of the present disclosure.

FIG. 8 is a flow chart of determining the RSW based on different priority orders according to some embodiments of the present disclosure.

FIG. 9 is a schematic block diagram of a first terminal device not being part of the invention.

FIG. 10 is a schematic block diagram of a terminal device of the invention.

FIG. 11 is a schematic block diagram of a chip being part of the invention.

Embodiments of the present disclosure will be described with reference to the accompanying drawings.

## DETAILED DESCRIPTION

Although specific configurations and arrangements are discussed, it should be understood that this is done for illustrative purposes only. It will be apparent to a person skilled in the pertinent art that the present disclosure can also be employed in a variety of other applications.

It is noted that references in the specification to "one embodiment," "an embodiment," "an example embodiment," "some embodiments," "certain embodiments," etc., indicate that the embodiment described may include a particular feature, structure, or characteristic, but every embodiment may not necessarily include the particular feature, structure, or characteristic. Moreover, such phrases do not necessarily refer to the same embodiment. Further, when a particular feature, structure, or characteristic is described in connection with an embodiment, it would be within the knowledge of a person skilled in the pertinent art to effect such feature, structure, or characteristic in connection with other embodiments whether or not explicitly described.

In general, terminology may be understood at least in part from usage in context. For example, the term "one or more" as used herein, depending at least in part upon context, may be used to describe any feature, structure, or characteristic in a singular sense or may be used to describe combinations of features, structures or characteristics in a plural sense. Similarly, terms, such as "a," "an," or "the," again, may be understood to convey a singular usage or to convey a plural usage, depending at least in part upon context. In addition, the terms "based on" and "according to" may be understood as not necessarily intended to convey an exclusive set of factors and may, instead, allow for existence of additional factors not necessarily expressly described, again, depending at least in part on context.

Various aspects of wireless communication systems will now be described with reference to various apparatus and methods. These apparatus and methods will be described in the following detailed description and illustrated in the accompanying drawings by various blocks, modules, units, components, circuits, steps, operations, processes, algorithms, etc. (collectively referred to as "elements"). These elements may be implemented using electronic hardware, firmware, computer software, or any combination thereof. Whether such elements are implemented as hardware, firmware, or software depends upon the particular application and design constraints imposed on the overall system.

It should be understood that the technical solutions of embodiments of the present disclosure can be applied to various communication systems, such as: a Global System of Mobile communication (GSM) system, a Code Division Multiple Access (CDMA) system, a Wideband Code Division Multiple Access (WCDMA) system, a General Packet Radio Service (GPRS) system, a Long Term Evolution (LTE) system, a LTE Frequency Division Duplex (FDD) system, a LTE Time Division Duplex (TDD) system, a Universal Mobile Telecommunication System (UMTS), a Worldwide Interoperability for Microwave Access (WiMAX) communication system, a New Radio (NR) system or a future 5G system, etc.

In particular, the technical solutions of embodiments of the present disclosure can be applied to various communication systems which are based on non-orthogonal multiple access technologies, for example, a Sparse Code Multiple Access (SCMA) system, a Low Density Signature (LDS) system, etc. The SCMA system and the LDS system can also be called other names in the communication field. Further, the technical solutions of embodiments of the present disclosure can be applied to a multi-carrier transmission system which uses non-orthogonal multiple access technology, for example, systems using Orthogonal Frequency Division Multiplexing (OFDM), Filter Bank Multi-Carrier (FBMC), Generalized Frequency Division Multiplexing (GFDM), Filtered-OFDM (F-OFDM), etc.

The terminal device in embodiments of the present disclosure can refer to User Equipment (UE), access terminal, user unit, user station, mobile station, mobile device, remote station, remote terminal, mobile equipment, user terminal, terminal, wireless communication equipment, user agent or user device. The access terminal can be a cellular phone, a cordless phone, a Session Initiation Protocol (SIP) phone, a Wireless Local Loop (WLL) station, a Personal Digital Assistant (PDA), a handheld device with wireless communication functions, a computing device or other processing device connected to a wireless modem, an in-vehicle device, a wearable device, a terminal device in future 5G networks, or a terminal device in the future evolved Public Land Mobile Network (PLMN), etc. Embodiments of the present disclosure do not impose specific limitations on this.

The network device in embodiments of the present disclosure may be a device used for communicating with a terminal device. The network device may be a base station (Base Transceiver Station, BTS) in a GSM system or a CDMA system, a base station (NodeB, NB) in a WCDMA system, an evolved base station (Evolutional Node B, eNB or eNodeB) in an LTE system, or a wireless controller in a Cloud Radio Access Network (CRAN), or the network device may be a relay station, an access point, an on-vehicle device, a wearable device, a network device gNB in a future 5G network, or a network device in a future evolved PLMN, etc. Embodiments of the present disclosure do not impose specific limitations on this.

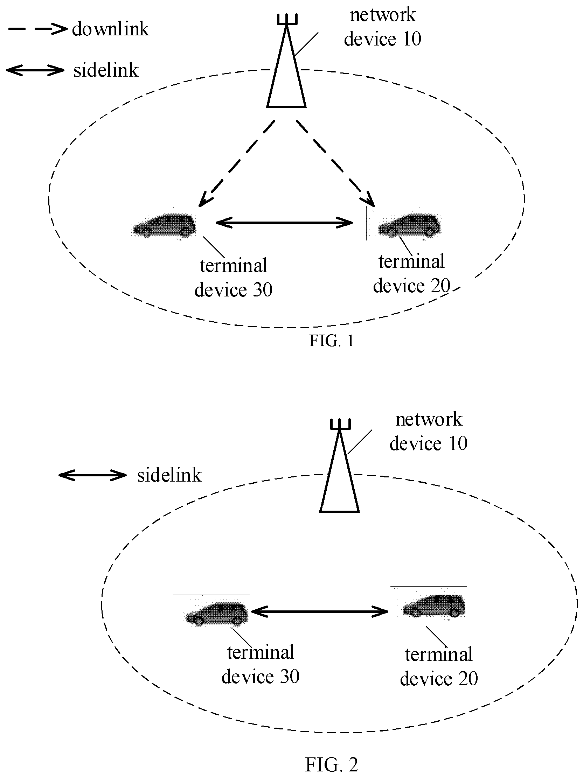

FIG. 1 and FIG. 2 are schematic diagrams of an application scenario of an embodiment of the present disclosure. FIG. 1 exemplarily shows one network device and two terminal devices. According to some embodiments, the wireless communication system may include multiple network devices and the coverage of each network device may include other numbers of terminal devices, and embodiments of the present disclosure do not impose specific limitations on this. In addition, the wireless communication system may further include other network entities such as Mobile Management Entity (MME), Serving Gateway (S-GW), Packet Data Network Gateway (P-GW), etc. However, embodiments of the present disclosure are not limited to this.

Specifically, a terminal device 20 and a terminal device 30 may communicate with each other in a Device to Device (D2D) communication mode. When performing D2D communication, the terminal device 20 and the terminal device 30 directly communicate with each other via the D2D link, that is, the sidelink (SL). For example, as shown in FIG. 1 or FIG. 2, the terminal device 20 and the terminal device 30 communicate directly through a SL. In FIG. 1, the terminal device 20 and the terminal device 30 communicate through the SL, and their transmission resources are allocated by a network device 10. In FIG. 2, the terminal device 20 and the terminal device 30 communicate through the SL, and transmission resources are autonomously selected by the terminal devices, and there is no need for the network device 10 to allocate transmission resources.

The D2D communication mode can be applied to Vehicle to Vehicle (V2V) communication or Vehicle to Everything (V2X) communication. In V2X communication, X can generally refer to any device with wireless transmission and reception capabilities, such as but not limited to slow-moving wireless devices, fastmoving vehicle-mounted devices, or network control nodes with wireless transmission and reception capabilities. It should be understood that embodiments of the present disclosure are mainly applied to the scenario of V2X communication, but can also be applied to any other D2D communication scenario, which is not limited in embodiments of the present disclosure.

LTE-V2X is standardized in Release-14 of the 3GPP protocol, and two transmission modes are defined, namely transmission mode 3 and transmission mode 4. Transmission resources for a terminal device using the transmission mode 3 are allocated by a base station, and the terminal device transmits data on the SL according to the resources allocated by the base station. The base station can allocate a resource for a single transmission to the terminal device, or the base station can allocate semi-static transmission resources to the terminal device. If a terminal device using the transmission mode 4 has a listening or sensing capability, the terminal device uses a sensing and reservation method to transmit data. If the terminal device does not have the listening or sensing capability, the terminal device randomly selects transmission resources from a resource pool. A terminal device having the listening or sensing capability obtains an available resource set from a resource pool by sensing, and the terminal device randomly selects a resource from the resource set for data transmission. Because the services in the Internet of Vehicles systems have periodic characteristics, terminal devices usually adopts semi-static transmissions. That is, after a terminal device selects a transmission resource, the terminal device will continue to use the resource in multiple transmission cycles, thereby reducing the probability of resource reselection and resource conflicts. The terminal device carries information to reserve resources for a next transmission in control information for the current transmission, so that other terminal devices can determine whether the resources are reserved and used by the terminal device by detecting the control information of the terminal device, and thus resource conflicts can be reduced.

In NR-V2X, autonomous driving needs to be supported, and thus higher requirements are put forward for data interaction between vehicles, such as higher throughput, lower delay, higher reliability, larger coverage, more flexible resource allocation, etc.

In the NR-V2X system, multiple transmission modes are introduced, such as mode 1 and mode 2. In mode 1, the network allocates SL transmission resources for terminals (similar to mode 3 in LTE-V2X). In mode 2, the terminals select SL transmission resources.

On the development of the NR-V2X system, the usage and application of SL technology has been assuming that the terminal device, for example, a road vehicle like a car, bus, truck or motorcycle, has unlimited supply of battery or processing power for V2X communication. However, for those portable devices in various applications, for example, smartphones, smart watches, health care devices, or AR/VR glasses, the amount of processing power is often constrained by the battery size and no long assumed to be unlimited. In order to prolong the wireless communication time during device operation, power saving mechanisms are introduced in the NR-V2X system to reduce or minimize the amount of SL signals and channels that the device needs to receive without significantly impacting the radio performance.

Typically, radio channel sensing for resource allocation, receiving SL control and data channels consume most of reception processing power in a NR SL user equipment (UE). For power efficient operation of a NR SL UE, power saving resource allocation (RA) mechanisms include random resource selection, partial sensing based resource selection, and SL discontinuous reception (DRX). The use of these power saving RA mechanisms could be performed independently or jointly by a transmitter UE (Tx-UE), depending on the configuration. For example, a Tx-UE may be configured by its higher layer to perform partial sensing to select resources for transmission that needs to be delivered within a certain duration of an SL DRX cycle of the intended target receiver UE (Rx-UE).

For a resource selection procedure triggered in a UE with SL data for transmission, the selection of a power saving RA mechanism to be used could be dependent on the type of SL traffic (periodic or aperiodic), packet delay budget (PDB), and whether the chosen SL resource pool allows reservation for another transport block (TB) or for multiple periods.

One of many challenging technical aspects relating to the design of resource selection procedure is the ability for the Tx-UE to find appropriate (referring to be receivable by the target destination UE) and suitable (referring to avoid collision with other UEs) resources for sending data information. For example, it is not feasible to configure SL DRX cycle for a receiver UE (Rx-UE) in advance that will always match with Tx-UE's traffic pattern, especially when the transmission type is aperiodic without a prior indication.

Another challenge of selecting suitable resources for transmission is to also ensure there are sufficient channel sensing results from the partial sensing operation in order to accurately determine resource availability, and thus, avoiding resources that have been reserved in the past by other UEs. At the same time, it is proposed by the inventor that the UE should also ensure there are sufficient number of resources for the final selection by the higher layer.

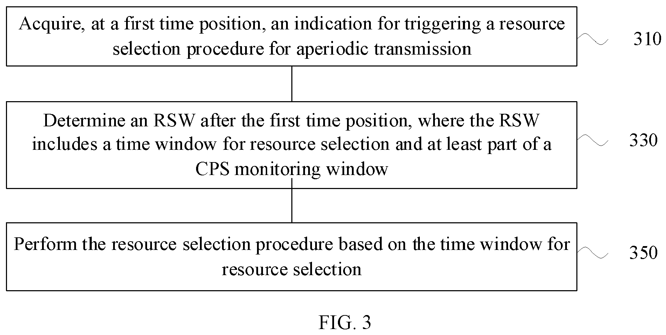

In some embodiments of the present disclosure, a proposed method of SL resource selection in provided, which may be implemented by a first terminal device, for example, a Tx-UE. FIG. 3 is a flowchart of the SL communication method being part of the invention. As shown in FIG. 3, the method includes following S310 to S350.

In S310, the first terminal device acquires, at a first time position, an indication for triggering a resource selection procedure for aperiodic transmission.

In some embodiments, the first terminal device is a Tx-UE operated under NR SL mode 2 as described above.

In some embodiments, the time positions mentioned in the present disclosure, for example, the first time position, the start time position and the end time position, can be indicated or expressed by a time unit with a unique identity within a certain range. For example, the first time position at which the triggering indication is received may be expressed by a time slot with a unique index within a frame or subframe.

In some embodiments, the indication for triggering the resource selection procedure for aperiodic transmission is generated by and acquired from a higher layer of the first terminal device. For example, when the Tx-UE is going to perform an SL transmission to a Rx-UE, the resource selection procedure may be triggered or requested by the higher layer of the Tx-UE, thereby causing the Tx-UE to report a valid SL resource set to the higher layer for the SL transmission.

In some embodiments, the resource selection procedure is used for selecting at least one SL resource from candidate SL resources within a time duration of selection window. Throughout the present disclosure, a resource reselection procedure is also referred to as the resource selection procedure and, thus, is omitted herein.

In S330, the first terminal device determines a resource selection window (RSW) after the first time position.

The RSW described herein includes a time window for resource selection and at least part of a contiguous partial sensing (CPS) monitoring window. In some embodiments, when referring to that the RSW includes at least part of the CPS monitoring window, it should be understood as that the RSW overlaps with at least part of the CPS monitoring window in time domain.

In some embodiments, the RSW includes the time window for resource selection, at least part of CPS monitoring window, and a processing time. Specifically, the processing time may correspond to a time length required by the first terminal device for sensing and preparation of physical sidelink control channel (PSCCH) and physical sidelink shared channel (PSSCH) transmission.

Throughout the disclosure, the time window for resource selection is also referred to and exchangeably used with a remaining RSW. In some embodiments, the time window for resource selection or the remaining RSW refers to a time window that is actually used by the first terminal device for resource selection. For example, the remaining RSW corresponds to a remaining part of RSW excluding the CPS monitoring window and time durations required by the first terminal device for sensing and preparation of SL transmission.

In some embodiments, the CPS monitoring window refers to a time duration in which the first terminal device detects dynamic SL resource reservation from other terminal devices in an SL resource pool. For example, in CPS, the Tx-UE monitors a set of consecutive slots within the CPS monitoring window corresponding to a Mode 2 resource pool between [$n+TA, n+TB$], where $n$ is the first time position, and $TA$, $TB$ are determined by the Tx-UE to detect dynamic resource reservations. Accordingly, in this example, the CPS monitoring window (also referred to as CPS monitoring interval) can be expressed as [$n+TA, n+TB$].

In some embodiments, the RSW is defined as a time duration of [$n+T1, n+T2$], where $n$ is the first time position, $T1$ and $T2$ are selected up to the first terminal device in such a manner that $T1$ is not larger than a preparation time for SL transmission and $T2$ is smaller than an indicated remaining packet delay budget (PDB).

As seen from above, a size of the remaining RSW is associated with how many candidate resources are available for the resource selection, and a size of the CPS monitoring window is associated with how many resources reserved by other terminal devices can be detected. Accordingly, in some embodiments, S330 includes determining the remaining RSW and/or the CPS monitoring window in such manner that there is sufficient amount of candidate resources for the resource selection and/or sufficient amount of channel sensing results to minimize transmission collision with other terminal devices.

In S350, the first terminal device performs the resource selection procedure based on the time window for resource selection.

In some embodiments, S350 includes initializing a candidate resource set based on a set of candidate resources within the time window for resource selection.

In some embodiments, in addition to or along with S350, the method further includes monitoring time resources of the SL resource pool within the CPS monitoring window.

In some embodiments, the monitoring is performed by decoding PSCCH and measuring reference signal received power (RSRP) corresponding thereto. For example, when the Tx-UE detects a PSCCH within the CPS monitoring window, it measures the RSRP of the PSSCH scheduled by the PSCCH. If the measured PSSCH-RSRP is higher than a PSSCH-RSRP threshold, and there is a resource conflict between data to be sent by the Tx-UE and a reserved resource(s) indicated by reservation information in the control information, the Tx-UE may stop SL transmission of the data corresponding to the conflicted resource.

In some embodiments, the initialization of candidate resource set is performed by initializing the candidate resource set to a set of all the candidate single-slot resources within the remaining RSW.

According to at least some embodiments of the present disclosure, after the indication for triggering a resource selection procedure for aperiodic transmission is acquired at the first time position, the RSW is determined by taking into account at least one of the remaining RSW and the CPS monitoring window before performing the resource selection procedure based thereon, thereby ensuring that there is sufficient amount of candidate resources for the resource selection and/or sufficient amount of channel sensing results to minimize transmission collision with other terminal devices.

Details of the proposed method of SL resource selection will be described as follows with reference to Examples I to VII.

**Example I**

In some embodiments, S330 further includes determining a start time position and/or an end time position of the RSW.

In some embodiments, the start time position of the RSW is determined according to a time length required by the first terminal device for SL transmission. For example, the start time position of the RSW may be determined in such a manner that a time length between the first time position and the start time position is smaller than or equal to the time length required by the first terminal device for SL transmission.

In some embodiments, the end time position of the RSW is determined according to a remaining PDB. For example, the end time position of the RSW may be determined in such a manner that a time length between the first time position and the end time position is smaller than or equal to the remaining PDB. In some embodiments, the remaining PDB is indicated by the higher layer of the first terminal device upon triggering the resource selection procedure.

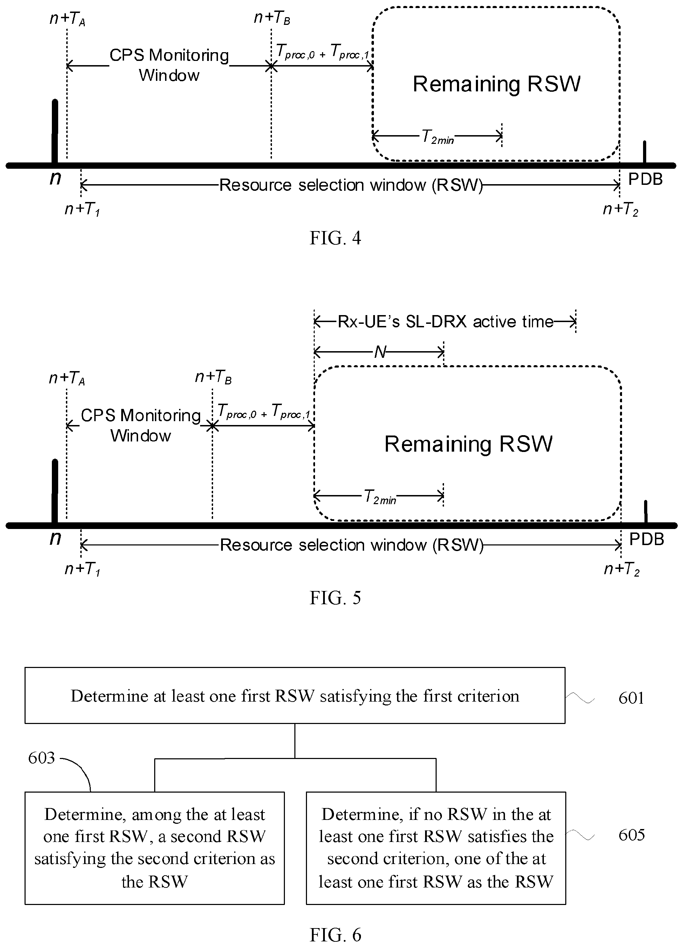

FIG. 4 is a schematic diagram illustrating a time domain structure of the RSW according to some embodiments of the present disclosure. As shown in FIG. 4, "n" represents the first time position at which the indication for triggering the resource selection procedure is received, "PDB" represents the remaining PDB.

Further referring to FIG. 4, "$n+T_1$" represents the start time position of the RSW, "$n+T_2$" represents the end time position of the RSW, and the time range [$n+T_1$, $n+T_2$] corresponds to a time length of the RSW.

In some embodiments, when the first terminal device is triggered to perform the resource selection procedure, the start time position and the end time position of the RSW are firstly determined.

For example, when the Tx-UE is triggered to perform an SL Mode 2 resource selection or reselection procedure to report a subset of resources from an SL resource pool not configured with a higher layer / RRC parameter *"sl-MultiReserveResource"*, the RSW is firstly defined as [$n+T_1$, $n+T_2$], where $T_1$ and $T_2$ are selected up to UE implementation in such a manner that $T_1$ is not larger than a UE preparation time for SL transmission and $T_2$ is less than the remaining PDB.

## Example II

In some embodiments, S330 further includes determining the RSW satisfying a first criterion, where the first criterion includes that a time length of the remaining RSW is greater than or equal to a first threshold.

As described above, the remaining RSW may refer to a time window that is actually used by the first terminal device for resource selection and, thus, may be associated with how many candidate resources are available for the resource selection.

Accordingly, when the first criterion is satisfied, the RSW is determined in such a manner that the time length of the remaining RSW is greater than or equal to the first threshold, thereby ensuring that there is sufficient amount of candidate resources for the resource selection.

In some embodiments, the first threshold is determined based on a high layer parameter configured for aperiodic transmission. For example, the first threshold may be determined based on the RRC parameter "sl-minNumCandidateSlotsAperiodic".

Further referring to FIG. 4, the RSW corresponds to a time range [$n+T_1$, $n+T_2$], the CPS monitoring window corresponds to a time range [$n+T_A$, $n+T_B$], $T_{proc,0}$ and $T_{proc,1}$ correspond to the processing time of the first terminal device, and the remaining RSW refers to a part of RSW excluding the CPS monitoring window and the time lengths for sensing and preparation of SL transmission.

As shown in FIG. 4, the end time position of the RSW, $n+T_2$, is same as an end time position of the remaining RSW.

As described above, $T_2$ is associated with the remaining PDB.

Further, in some embodiments, $T_{proc,0}$ and $T_{proc,1}$ are determined based on a sub-carrier spacing (SCS) and have a relatively fixed ranged of values. For example, a value of $T_{proc,0}$ ranges from 1 slot to 4 slots, and a value of $T_{proc,1}$ ranges from 3 slots to 17 slots. A sum of $T_{proc,0}$ and $T_{proc,1}$ may correspond to the processing time required by the first terminal device for sensing and preparation of PSCCH/PSSCH transmission. Specifically, $T_{proc,0}$ may be considered as a sensing processing time of the first time device, and $T_{proc,1}$ may be considered as a resource selection processing time of the first terminal device.

Accordingly, in order to determine the RSW satisfying the first criterion, that is, in order to obtain a remaining RSW with a sufficient time length, the end time position of the CPS monitoring window may be more adjustable.

In some embodiments, determining the RSW satisfying the first criterion includes determining the end time position of the CPS monitoring window based on a following formula (1).

$$T_2 - T_B - T_{proc,0} - T_{proc,1} \geq T_{2min} \tag{1}$$

Herein, $T_2$ corresponds to the end time position of the RSW and equals to a time length between the first time position and the end time position of the RSW, $T_B$ corresponds to the end time position of the CPS monitoring window and equals to a time length between the first time position and the end time position of the CPS monitoring window, $T_{proc,0}$ and $T_{proc,1}$ correspond to the processing time of the first terminal device, and $T_{2min}$ is the first threshold.

In some embodiments, $T_{2min}$ is configured or pre-configured based on L1 priority ($prior_{TX}$).

According to at least some embodiments of the present disclosure, after the indication for triggering the resource selection procedure is acquired at the first time position, the RSW is determined by taking into account the remaining RSW in such a manner that the time length of the remaining RSW is greater than or equal to the first threshold, thereby ensuring that there is sufficient amount of candidate resources for the resource selection to minimize transmission collision with other terminal devices.

## Example III

In some embodiments, S330 further includes determining the RSW satisfying a second criterion, where the second criterion includes that a time length of the CPS monitoring window is greater than or equal to a second threshold.

As described above, the CPS monitoring window may refer to a time duration in which the first terminal device detects dynamic SL resource reservation from other terminal devices in the SL resource pool and, thus, may be associated with how many resources reserved by other terminal devices can be detected or the maximum/allowable time length of dynamic SL reservation can be indicated in sidelink control information (SCI).

Accordingly, when the second criterion is satisfied, the RSW is determined in such a manner that the time length of the CPS monitoring window is greater than or equal to the second threshold, thereby ensuring that there is sufficient amount of channel sensing results to minimize transmission collision with other terminal devices.

In some embodiments, the second threshold is determined based on at least one of a high layer parameter configured for aperiodic transmission; the remaining PDB; and a preset range of values. For example, the second threshold may be determined based on the RRC parameter "sl-CPS-WindowAperiodic".

Under the NR SL Mode 2 operation, SL resources within a resource pool can be dynamically reserved by a Tx-UE for retransmission of a same data transport block (TB). When a higher layer / RRC parameter *"sl-MultiReserveResource"* is configured and enabled for a Mode 2 resource pool, periodic reservation of resources for transmission of multiple TBs is allowable by the Tx-UE in the resource pool. Otherwise, when the parameter *"sl-MultiReserveResource"* is not configured or not enabled for the Mode 2 resource pool, only dynamic reservation of SL resources can be performed by the Tx-UE using the frequency and time resource assignment fields in a SCI to indicate up to 3 SL resources within 32 slots.

Since SL UEs are allowed to reserve resources for up to 32 slots dynamically per SCI, this type of resource reservation may be monitored during SL sensing and taken into account as part of the Mode 2 resource selection procedure. When an SL Mode 2 resource selection procedure is triggered to report a subset of resources to the higher layer for PSCCH and PSSCH transmission, and partial sensing is also configured by the higher layer, CPS may be performed by the Tx-UE to detect dynamic SL resource reservations from other UEs in an SL resource pool.

Referring to FIG. 4, in CPS, the Tx-UE monitors a set of consecutive slots within the Mode 2 resource pool between $[n+T_A, n+T_B]$. Therefore, logically $T_B$ minus $T_A$ may be as large as 31 slots in order to detect all possible dynamic resource reservations. When an SL Mode 2 resource selection procedure is triggered by an aperiodic traffic in slot $n$ (for which the timing is unpredictable and cannot be known to the Tx-UE in advance), the start of CPS is only possible after the triggering slot $n$.

Based on the above description of the intended purpose for the Tx-UE to perform CPS, in some embodiments, the CPS monitoring window is determined in such a manner that the time length of the CPS monitoring window is greater than or equal to the second threshold, so as to maximize the utilization and effectiveness of CPS sensing results, that is, to detect as many reserved resources as possible during a resource selection procedure.

Accordingly, in some embodiments, determining the RSW satisfying the second criterion includes determining an end time position of the CPS monitoring window that is at least a processing time before first slot of the time window for resource selection; and determining a start time position of the CPS monitoring window that is at least M slots before the first slot of the time window for resource selection or before the end time position of the CPS monitoring window.

Herein, the processing time is equal to a sum of $T_{proc,0}$ and $T_{proc,1}$, where $T_{proc,0}$ and $T_{proc,1}$ are determined based on the SCS.

In some embodiments, a value of M is determined based on at least one of a high layer parameter configured for the aperiodic transmission; a remaining packet delay budget (PDB); and a preset range of values. For example, M is determined based on the RRC parameter *"sl-CPS-WindowAperiodic"*.

In some other embodiments, determining the RSW satisfying the second criterion includes determining the end time position of the CPS monitoring window based on a following formula (2).

$$T_B - T_A \geq M \qquad\qquad (2)$$

Herein, $T_A$ corresponds to the start time position of the CPS monitoring window and equals to a time length between the first time position and the start time position of the CPS monitoring window, $T_B$ corresponds to the end time position of the CPS monitoring window and equals to a time length between the first time position and the end time position of the CPS monitoring window, and M is the second threshold.

In some embodiments, $T_A$ is equal to 0 or 1 time unit, for example 0 or 1 slot. Accordingly, the monitoring of reserved resources can be started as early as possible after the first time position.

In some embodiments, the second threshold, M, that is, e.g., the minimum sensing interval / window length for CPS, is configured or pre-configured; or is determined based on: L1 priority *(prior$_{TX}$)*; or the remaining PDB or a percentage of the remaining PDB; or a preset range of values.

In some embodiments, the formula (2) is further restricted as a following formula (3).

$$M \leq T_B - T_A \leq 31 \tag{3}$$

Herein, the value "31" corresponds to the maximum of 32 slots dynamically reserved per SCI. Accordingly, referring to FIG. 4, by further restricting the time length of CPS monitoring window within 32 slots, the remaining RSW can be maximized.

According to at least some embodiments of the present disclosure, after the indication for triggering the resource selection procedure is acquired at the first time position, the RSW is determined by taking into account the CPS monitoring window in such a manner that the time length of the CPS monitoring window is greater than or equal to the second threshold, thereby ensuring that there is sufficient amount of channel sensing results to minimize transmission collision with other terminal devices.

**Example IV**

In some embodiments, S330 further includes determining the RSW satisfying a third criterion, where the third criterion includes that an overlapped time length between the remaining RSW and an SL DRX active duration of a second terminal device is greater than or equal to a third threshold.

In some embodiments, the first terminal device is the Tx-UE, and the second terminal device is an Rx-UE.

In some embodiments, the third threshold is determined based on at least one of a high layer parameter configured for aperiodic transmission; and a preset range of values.

When the second terminal device is configured with SL DRX with a certain period cycle, the overlapped time length between the remaining RSW and the SL DRX active duration is associated with how many candidate resources within the remaining RSW is receivable by the second terminal device.

Accordingly, when the third criterion is satisfied, the RSW is determined in such a manner that the overlapped time period between the remaining RSW and the SL DRX active duration is greater than or equal to the third threshold, thereby ensuring that there is sufficient amount of candidate resources for selection within the awake time of the second terminal device to guarantee a minimal reception probability.

In some embodiments, when the target destination Rx-UE is configured with SL DRX with a certain period cycle and the SL DRX active duration (or ON duration) is available to the Tx-UE, the remaining RSW is determined to overlap with the SL DRX active duration of the Rx-UE as much as possible. For example, referring to FIG. 5, the remaining RSW is determined to overlap with the SL DRX active duration by at least N slots, where $N$ corresponds to the third threshold; and $N$ may be pre-defined, configured or pre-configured; or $N$ may be determined according to L1 priority ($prior_{TX}$) or based on a range of values.

According to at least some embodiments of the present disclosure, after the indication for triggering the resource selection procedure is acquired at the first time position, the RSW is determined by taking into account the remaining RSW in such a manner that the overlapped time period between the remaining RSW and the SL DRX active duration of the second terminal device is greater than or equal to a third threshold, thereby ensuring that there is sufficient amount of candidate resources for selection within the awake time of the second terminal device to guarantee a minimal reception probability.

**Example V**

In some embodiments, S330 further includes determining the RSW based on whether the first criterion and the second criterion can be satisfied in a second priority order, where the first criterion has a higher priority than the second criterion in the second priority order.

In other words, when the first and second criterions cannot both be satisfied, the determination of RSW may try to satisfy the first criterion preemptively.

FIG. 6 is a flow chart of determining the RSW based on the second priority order according to some embodiments of the present disclosure. As shown in FIG. 6, determining the RSW in S330 includes following S601 to S605.

In S601, at least one first RSW satisfying the first criterion is determined.

In some embodiments, S601 is implemented by determining the at least one first RSW in such a manner that the time length of the remaining RSW is greater than or equal to the first threshold.

For example, S601 may include determining a set of first RSWs in which the end time positions of their CPS monitoring windows all satisfy the following formula (4).

$$T_B \leq T_2 - T_{2min} - T_{proc,0} - T_{proc,1} \tag{4}$$

Herein, $T_B$ represents a time length between the first time position and the end time position of the CPS monitoring window; $T_2$ represents a time length between the first time position and the end time position of the first RSW, and is determined according to the remaining PDB; $T_{proc,0}$ and $T_{proc,1}$ correspond to the processing time of the first terminal device; and $T_{2min}$ is the first threshold.

Further details of S601 may refer to some embodiments as described in Example II and, thus, are omitted here for brevity.

In S603, among the at least one first RSW, a second RSW satisfying the second criterion is determined as the RSW.

In some embodiments, S603 may be implemented by determining, from the at least one first RSW, the at least one second RSW in such a manner that the time length of the CPS monitoring window is greater than or equal to the second threshold.

For example, S603 may include determining, from a set of first RSWs determined in S601, a second RSW with the end time position of its CPS monitoring window satisfying the following formula (5).

$$T_B \geq M + T_A \tag{5}$$

Herein, $T_B$ represents a time length between the first time position and the end time position of the CPS monitoring window; $T_A$ represents a time length between the first time position and the start time position of the CPS monitoring window and $T_A$ = 0 or 1; and $M$ is the second threshold.

In some embodiments, S603 further includes restricting the formula (5) as a following formula (5').

$$M + T_A \leq T_B \leq 31 + T_A \tag{5'}$$

In other words, when the first and second criterions can be both satisfied, the determination of $T_B$ may be further restricted, thereby maximizing the remaining RSW.

Further details of S603 may refer to some embodiments as described in Example III and, thus, are omitted here for brevity.

In S605, if no RSW in the at least one first RSW satisfies the second criterion, one of the at least one first RSW is determined as the RSW.

In other words, when the second criterion cannot be satisfied by any one of the at least one first RSW, the final RSW may be determined as one first RSW satisfying the first criterion.

In some embodiments, S605 includes determining the RSW as one first RSW with a maximum remaining RSW. In other words, when the first and second criterions cannot both be satisfied, the RSW satisfying the first criterion with a maximum remaining RSW is determined.

For example, S605 includes determining the RSW in such a manner that the CPS monitoring window satisfies following formulas (6) and (7).

$$T_A = 0 \ or \ 1 \tag{6}$$

$$T_B = T_2 - T_{2min} - T_{proc,0} - T_{proc,1} \tag{7}$$

Herein, $T_A$ represents a time length between the first time position and the start time position of the CPS monitoring window; $T_B$ represents a time length between the first time position and the end time position of the CPS monitoring window; $T_2$ represents a time length between the first time position and the end time position of the first RSW, and is determined according to the remaining PDB; $T_{proc,0}$ and $T_{proc,1}$ correspond to the processing time of the first terminal device; and $T_{2min}$ is the first threshold.

Based on S603 or S605, the RSW can be determined with the end time position of the CPS monitoring window satisfying both the first and second criterions (S603) or satisfying only the first criterion (S605). Accordingly, the CPS monitoring window can be determined as $[n+T_A, n+T_B]$, and the remaining RSW can be determined as $[n+T_B+T_{proc,0} +T_{proc,1}, n+T_2]$.

**Example VI**

In some embodiments, S330 further includes determining the RSW based on whether the first criterion, the second criterion and the third criterion can be satisfied in a first priority order, where the third criterion has a highest priority and the second criterion has a lowest priority in the first priority order.

In other words, when the first to third criterions cannot all be satisfied, the priority or rank, in which the determination of RSW tries to satisfy, follows the order of firstly the third criterion, secondly the first criterion, and lastly the second criterion.

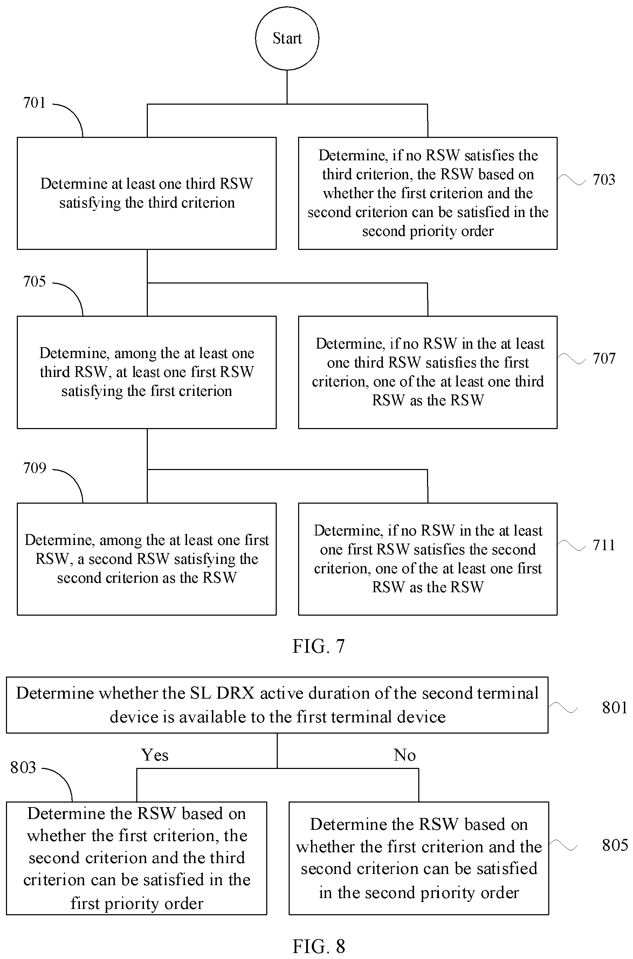

FIG. 7 is a flow chart of determining the RSW based on the first priority order according to some embodiments of the present disclosure. As shown in FIG. 7, determining the RSW in S330 includes following S701 to S711.

In S701, at least one third RSW satisfying the third criterion is determined.

In some embodiments, S701 is implemented by determining the at least one third RSW in such a manner that the overlapped time length between the remaining RSW and the SL DRX active duration is greater than or equal to the third threshold.

In other words, for example, when the target destination Rx-UE is configured with SL DRX with a certain period cycle and the SL DRX active duration (or ON duration) is available to the Tx-UE, the third RSW is firstly determined in such a manner that the overlapped time period between the remaining RSW and the SL DRX active duration is greater than or equal to the third threshold, thereby ensuring that there is sufficient amount of candidate resources for selection within the awake time of the second terminal device to guarantee a minimal reception probability.

Further details of S701 may refer to some embodiments as described in Example IV and, thus, are omitted here for brevity.

In S703, if no RSW satisfies the third criterion, the RSW is determined based on whether the first criterion and the second criterion can be satisfied in the second priority order.

In other words, for example, when there are less than $N$ number of slots from the Rx-UE's SL DRX active duration overlapped with the RSW, the determination of the CPS monitoring window and the remaining RSW follows the determination thereof when the SL DRX active duration is not configured for the Rx-UE or not available for the Tx-UE.

Further details of S703 may refer to some embodiments as described in Example V and, thus, are omitted here for brevity.

In S705, among the at least one third RSW, at least one first RSW satisfying the first criterion is determined.

In some embodiments, S705 is implemented by determining, from the at least one third RSW, the at least one first RSW in such a manner that the time length of the remaining RSW is greater than or equal to the first threshold.

For example, S705 may include determining a set of first RSWs in which the end time positions of their CPS monitoring windows all satisfy the following formula (4).

$$T_B \leq \bar{T}_2 - T_{2min} - T_{proc,0} - \bar{T}_{proc,1} \tag{4}$$

Herein, $T_B$ represents a time length between the first time position and the end time position of the CPS monitoring window; $T_2$ represents a time length between the first time position and the end time position of the first RSW, and is determined according to the remaining PDB; $T_{proc,0}$ and $T_{proc,1}$ correspond to the processing time of the first terminal device; and $T_{2min}$ is the first threshold.

Further details of S705 may refer to some embodiments as described in Example II and, thus, are omitted here for brevity.

In S707, if no RSW in the at least one third RSW satisfies the first criterion, one of the at least one third RSW is determined as the RSW.

In other words, when the first criterion cannot be satisfied by any one of the at least one third RSW, the final RSW may be determined as one third RSW satisfying the third criterion.

In some embodiments, S707 includes determining the RSW as one third RSW with a maximum overlapped time length between the remaining RSW and the SL DRX active duration.

In S709, among the at least one first RSW, a second RSW satisfying the second criterion is determined as the RSW.

In some embodiments, S709 may be implemented by determining, from the at least one first RSW, the at least one second RSW in such a manner that the time length of the CPS monitoring window is greater than or equal to the second threshold.

For example, S709 may include determining, from a set of first RSWs determined in S705, a second RSW with the end time position of its CPS monitoring window satisfying the following formula (5).

$$T_B \geq M + T_A \tag{5}$$

Herein, $T_B$ represents a time length between the first time position and the end time position of the CPS monitoring window; $T_A$ represents a time length between the first time position and the start time position of the CPS monitoring window and $T_A$ = 0 or 1; and $M$ is the second threshold.

Further details of S709 may refer to some embodiments as described in Example III and, thus, are omitted here for brevity.

In S711, if no RSW in the at least one first RSW satisfies the second criterion, one of the at least one first RSW is determined as the RSW.

In other words, when the second criterion cannot be satisfied by any one of the at least one first RSW, the final RSW may be determined as one first RSW satisfying the first criterion.

In some embodiments, S711 includes determining the RSW as one first RSW with a maximum remaining RSW. In other words, when the second criterion cannot be satisfied by any one of the at least one first RSW, the RSW satisfying the first criterion with a maximum remaining RSW is determined.

For example, S711 includes determining the RSW in such a manner that the CPS monitoring window satisfies following formulas (6) and (7).

$$T_A = 0 \; or \; 1 \tag{6}$$

$$T_B = T_2 - T_{2min} - T_{proc,0} - T_{proc,1} \tag{7}$$

Herein, $T_A$ represents a time length between the first time position and the start time position of the CPS monitoring window; $T_B$ represents a time length between the first time position and the end time position of the CPS monitoring window; $T_2$ represents a time length between the first time position and the end time position of the first RSW, and is determined according to the remaining PDB; $T_{proc,0}$ and $T_{proc,1}$ correspond to the processing time of the first terminal device; and $T_{2min}$ is the first threshold.

Based on S707, S709 or S711, the RSW can be determined with the end time position of the CPS monitoring window satisfying only the third criterion (S707) or satisfying all the first to third criterions (S709) or satisfying only the first and third criterions (S711). Accordingly, the CPS monitoring window can be determined as $[n+T_A, n+T_B]$, and the remaining RSW can be determined as $[n+T_B+T_{proc,0}+T_{proc,1}, n+T_2]$.

**Example VII**

In some embodiments, S330 further includes determining the RSW based on whether the SL DRX active duration of the second terminal device is available to the first terminal device.

FIG. 8 is a flow chart of determining the RSW based on different priority orders according to some embodiments of the present disclosure. As shown in FIG. 8, determining the RSW in S330 includes following S801 to S805.

In S801, it is determined whether the SL DRX active duration of the second terminal device is available to the first terminal device.

In some embodiments, when the second terminal device is configured with the SL DRX mode, the first terminal device may be informed of the SL DRX active duration through an SCI sent by the second terminal device.

Accordingly, if the first terminal device successfully obtains the SL DRX active duration of the second terminal device, it can be determined that the SL DRX active duration of the second terminal device is available to the first terminal device.

Otherwise, if the first terminal device fails to obtain the SL DRX active duration of the second terminal device, for example, when the second terminal device is not configured with the SL DRX mode or the transmission of the SL DRX active duration fails, it can be determined that the SL DRX active duration of the second terminal device is not available to the first terminal device.

In S803, if the SL DRX active duration of the second terminal device is available, the first terminal device determines the RSW based on whether the first criterion, the second criterion and the third criterion can be satisfied in the first priority order.

For example, referring to FIG. 5, when SL DRX is configured for the Rx-UE, the timing location and the length of the SL DRX active duration may be not fully aligned with the resource selection or reselection trigger of the Tx-UE. Specifically, if the SL DRX active duration of the Rx-UE is located close to the beginning of the RSW (e.g., close to the triggering slot $n$), there may be no sufficient time for the Tx-UE to perform CPS monitoring to avoid collision. Otherwise, if the SL DRX active duration of the Rx-UE is located close to the end of the RSW (e.g., overlapped slots between the SL DRX active duration and the remaining RSW is less than $N$ slots or the gap between the beginning of the SL DRX active duration and the end of the RSW is less than $T_{2min}$ slots), there may be no sufficient number of resources for (re)transmissions of the same TB. Therefore, it is possible not all the first to third criterions as described above can be satisfied for the triggered resource selection procedure. As shown in FIG. 5, when there is sufficiently long duration for the PDB and Rx-UE's SL DRX active duration is located in a good position within the RSW, all of the proposed first to third criterions can still be satisfied even with taking the UE processing time "$T_{proc,0}$ + $T_{proc,1}$" into account.

Further details of S803 may refer to some embodiments as described in Example VI and, thus, are omitted here for brevity.

In S805, if the SL DRX active duration of the second terminal device is not available, the first terminal device determines the RSW based on whether the first criterion and the second criterion can be satisfied in the second priority order.

For example, referring to FIG. 4, when the resource selection procedure is triggered at slot $n$ in a resource pool that does not allow periodic resource reservation (i.e., *sl-MultiReserveResource* is not configured for the resource pool), the triggering slot $n$ (e.g., the timing arrival of data packet for transmission) for the resource selection procedure is unpredictable and cannot be known to the Tx-UE in advance. In a such situation, CPS monitoring can be only performed by the Tx-UE to detect dynamic reservation from other UEs after the triggering slot $n$. In a case when the resource selection procedure is triggered by an aperiodic transmission with sufficiently long PDB as shown in FIG. 4, it is possible for the Tx-UE to first perform CPS monitoring within a window between slots $n+T_A$ and $n+T_B$ with a length that is able to satisfy the second criterion of $M$ slots. At the same time, it still leaves a remaining RSW with a sufficient amount of time length that is able to satisfy the first criterion of $T_{2min}$ slots, even when some UE processing time of $T_{proc,0}$ + $T_{proc,1}$ is taken into account after the last slot of the CPS monitoring window, $n+T_B$. In this case, since the determination of the RSW only needs to take into account of a minimum time length (M slots) for the CPS monitoring window (the second criterion) and a minimum time length ($T_{2min}$ slots) for the remaining RSW (the first criterion), it would be ideal to perform CPS monitoring as early as possible starting from $T_A$ = 0 or 1, thereby maximizing the time length for the remaining RSW and hence the candidate resource set for the final resource selection or reselection.

Further details of S805 may refer to some embodiments as described in Example V and, thus, are omitted here for brevity.

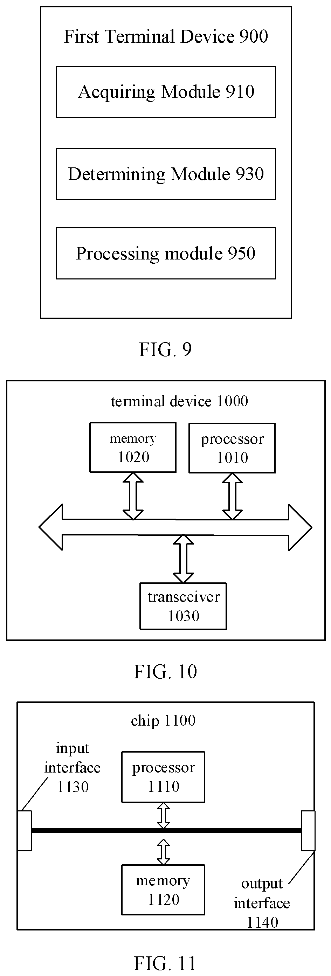

The sidelink communication method according to some embodiments of the present disclosure are described in detail above, and terminal devices according to some embodiments of the present disclosure will be described below with reference to FIG. 9 to FIG. 10. The technical features described in the method embodiments are applicable to the following device embodiments.

FIG. 9 is a schematic block diagram of a first terminal device 900 according to of the present disclosure not being part of the invention. As shown in FIG. 9, the first terminal device 900 includes an acquiring module 910, a determining module 930 and a processing module 950.

The acquiring module 910 is configured to acquire an indication for triggering a resource selection procedure for aperiodic transmission at a first time position.

The determining module 930 is configured to determine an RSW after the first time position, where the RSW includes a time window for resource selection and at least part of a CPS monitoring window.

The processing module 950 is configured to perform the resource selection procedure based on the time window for resource selection.

The determining module 930 configured to determine the RSW is specifically configured to perform at least one of: determining the RSW satisfying a first criterion, where the first criterion includes that a time length of the time window for resource selection is greater than or equal to a first threshold; determining the RSW satisfying a second criterion, where the second criterion includes that a time length of the CPS monitoring window is greater than or equal to a second threshold; and determining the RSW satisfying a third criterion, where the third criterion includes that an overlapped time length between the time window for resource selection and an SL discontinuous reception (DRX) active duration of a second terminal device is greater than or equal to a third threshold.

The determining module 930 configured to determine the RSW satisfying the first criterion is specifically configured to determine an end time position of the CPS monitoring window based on a following formula:

$$T_2 - T_B - T_{proc,0} - T_{proc,1} \geq T_{2min}$$

Herein, $T_2$ corresponds to an end time position of the RSW, $T_B$ corresponds to the end time position of the CPS monitoring window, $T_{proc,0}$ and $T_{proc,1}$ correspond to a processing time of the first terminal device, and $T_{2min}$ is the first threshold.

An end time position of the RSW is same as an end time position of the time window for resource selection.

The determining module 930 is further configured to: determine the first threshold based on a high layer parameter configured or pre-configured for the aperiodic transmission.

The determining module 930 configured to determine the RSW satisfying the second criterion is specifically configured to: determine an end time position of the CPS monitoring window that is a processing time before first slot of the time window for resource selection; and determine a start time position of the CPS monitoring window that is at least M slots before the first slot of the time window for resource selection or before the end time position of the CPS monitoring window, where M is determined based on a higher layer parameter configured or pre-configured for the aperiodic transmission.

The processing time is equal to a sum of $T_{proc,0}$ and $T_{proc,1}$, where $T_{proc,0}$ and $T_{proc,1}$ are determined based on a SCS.

The determining module 930 configured to determine the RSW satisfying the second criterion is specifically configured to determine an end time position of the CPS monitoring window based on a following formula:

$$T_B - T_A \geq M$$

Herein, $T_B$ corresponds to the end time position of the CPS monitoring window, $T_A$ corresponds to a start time position of the CPS monitoring window and is equal to 0 or 1 time unit, and $M$ is the second threshold.

The determining module 930 is further configured to determine the second threshold or a value of M based on at least one of: a high layer parameter configured for the aperiodic transmission; a remaining packet delay budget (PDB); and a preset range of values.

The determining module 930 is further configured to determine the third threshold based on at least one of: a high layer parameter configured for the aperiodic transmission; and a preset range of values.

The determining module 930 configured to determine the RSW is specifically configured to: determine the RSW based on whether the first criterion, the second criterion and the third criterion can be satisfied in a first priority order, where the third criterion has a highest priority and the second criterion has a lowest priority in the first priority order.

The determining module 930 configured to determine the RSW is specifically configured to: determine the RSW based on whether the first criterion and the second criterion can be satisfied in a second priority order, where the first criterion has a higher priority than the second criterion in the second priority order.

The determining module 930 configured to determine the RSW is specifically configured to: determine whether the SL DRX active duration of the second terminal device is available to the first terminal device; in response to that the SL DRX active duration is available, determine the RSW based on whether the first criterion, the second criterion and the third criterion can be satisfied in a first priority order, where the third criterion has a highest priority and the second criterion has a lowest priority in the first priority order; and in response to that the SL DRX active duration is not available, determine the RSW based on whether the first criterion and the second criterion can be satisfied in a second priority order, where the first criterion has a higher priority than the second criterion in the second priority order.

The determining module 930 configured to determine the RSW based on whether the first criterion, the second criterion and the third criterion can be satisfied in the first priority order is specifically configured to: in response to that no RSW satisfies the third criterion, determine the RSW based on whether the first criterion and the second criterion can be satisfied in the second priority order; determine at least one third RSW satisfying the third criterion; in response to that no RSW in the at least one third RSW satisfies the first criterion, determine one of the at least one third RSW as the RSW; determine, in the at least one third RSW, at least one first RSW satisfying the first criterion; in response to that no RSW in the at least one first RSW satisfies the second criterion, determine one of the at least one first RSW as the RSW; determine, in the at least one first RSW, a second RSW satisfying the second criterion as the RSW.

The determining module 930 configured to determine the RSW based on whether the first criterion and the second criterion can be satisfied in the second priority order is specifically configured to: determine at least one first RSW satisfying the first criterion; in response to that no RSW in the at least one first RSW satisfies the second criterion, determine one of the at least one first RSW as the RSW; determine, in the at least one first RSW, a second RSW satisfying the second criterion as the RSW.

The determining module 930 configured to determine one of the at least one first RSW as the RSW is specifically configured to determine the RSW in such a manner that the CPS monitoring window satisfies following formulas:

$$\bar{T}_A = 0 \text{ or } 1 \ ;$$

and

$$T_B = T_2 - T_{2min} - T_{proc,0} - T_{proc,1}$$

Herein, $T_A$ corresponds to a start time position of the CPS monitoring window, $T_B$ corresponds to an end time position of the CPS monitoring window, $T_2$ is an end time position of the RSW, $T_{proc,0}$ and $T_{proc,1}$ correspond to a processing time of the first terminal device, and $T_{2min}$ is the first threshold.

The determining module 930 is further configured to: determine the RSW in such a manner that the second RSW maximizes the time length of the time window for resource selection while satisfying a following formula:

$$M \le T_B - T_A \le 31$$

Herein, $T_B$ corresponds to an end time position of the CPS monitoring window, $T_A$ corresponds to a start time position of the CPS monitoring window, and M is the second threshold.

The determining module 930 configured to determine the RSW is specifically configured to perform at least one of: determining a start time position of the RSW according to a time length required by the first terminal device for SL transmission; and determining an end time position of the RSW according to a remaining packet delay budget (PDB).

The determining module 930 configured to determine the start time position of the RSW is specifically configured to: determine the start time position of the RSW in such a manner that a time length between the first time position and the start time position is smaller than or equal to the time length required by the first terminal device for SL transmission.

The determining module 930 configured to determine the end time position of the RSW is specifically configured to: determine the end time position of the RSW in such a manner that a time length between the first time position and the end time position is smaller than or equal to the remaining PDB.

The processing module 950 configured to perform the resource selection procedure based on the time window for resource selection is specifically configured to: initialize a candidate resource set based on a set of all candidate resources within the time window for resource selection.

The processing module 950 is further configured to: monitor a set of consecutive slots in an SL resource pool within the CPS monitoring window, where the SL resource pool is not configured with a parameter or the parameter for the SL resource pool is configured as disabled, and the parameter is indicative of periodic resource reservation.

The parameter includes a higher layer parameter *"sl-MultiReserve Resource"*.

It should be understood that the first terminal device 900 according to embodiments correspond to the first terminal device described in the method embodiments, and modules in the first terminal device 900 are used to implement the above and other operations and/or functions implemented by the first terminal device in the method embodiments. For the sake of brevity, details are not described herein again.

As shown in FIG. 10, some embodiments of the present disclosure further provide a terminal device 1000 of the invention. The terminal device 1000 may be the terminal device 900 in FIG. 9, which can be used to perform the steps of the first terminal device corresponding to the method embodiments. The terminal device 1000 shown in FIG. 10 includes a processor 1010, and the processor 1010 can call and run a computer program from the memory to implement the methods according to embodiments of the present disclosure.

In some embodiments, as shown in FIG. 10, the terminal device 1000 may further include a memory 1020. The processor 1010 may call and run a computer program from the memory 1020 to perform the methods in embodiments of the present disclosure.

The memory 1020 may be a separate device independent of the processor 1010, or may be integrated in the processor 1010.

In some embodiments, as shown in FIG. 10, the terminal device 1000 may further include a transceiver 1030, and the processor 1010 may control the transceiver 1030 to communicate with other devices. Specifically, the transceiver may send information or data to other devices, or receive information or data sent by other devices.

The transceiver 1030 may include a transmitter and a receiver. The transceiver 3030 may further include one or more antennas.

In some embodiments, the terminal device 1000 may specifically be the terminal device according to an embodiment of the present disclosure, and the terminal device 1000 may implement the corresponding processes implemented by the terminal device in the method embodiments of the present disclosure. For brevity, details are not repeated here.

In a specific implementation, the modules in the terminal device 900 may be implemented by the processor 1110 or the transceiver 1130 in FIG. 11.

FIG. 11 is a schematic structural diagram of a chip of the invention. The chip 1100 shown in FIG. 11 includes a processor 1110, and the processor 1110 can call and run a computer program from a memory to implement the method according to embodiments of the present disclosure.

In some embodiments, as shown in FIG. 11, the chip 1100 may further include a memory 1120. The processor 1110 may call and run a computer program from the memory 1120 to implement the method according to embodiments of the present disclosure.

The memory 1120 may be a separate device independent of the processor 1110, or may be integrated in the processor 1110.

In some embodiments, the chip 1100 may further include an input interface 1130. The processor 1110 may control the input interface 1130 to communicate with other devices or chips, and specifically, the processor 1110 can control the input interface to obtain information or data sent by other devices or chips.

In some embodiments, the chip 1100 may further include an output interface 1140. The processor 1110 can control the output interface 1140 to communicate with other devices or chips, and specifically, the processor 1110 can control the output interface 1140 to output information or data to other devices or chips.

In some embodiments, the chip can be applied to the terminal device in embodiments of the present disclosure, and the chip can implement the corresponding processes implemented by the first terminal device in various methods according to embodiments of the present disclosure. For brevity, details are not repeated herein again.

It should be understood that the chip in the embodiments of the present disclosure may also be referred to as a system-level chip, a system chip, a chip system, or a system-on-chip, etc.

It should be understood that the terms "system" and "network" herein are often used interchangeably. The term "and/or" is only an association relationship describing associated objects, which means that there can be three kinds of relationships, for example, A and/or B can mean three situations: A alone, B alone, and A and B together. In addition, the character "/" herein generally indicates that the associated objects before and after "/" are in an "or" relationship.

It should be understood that the processor in embodiments of the present disclosure may be an integrated circuit chip with signal processing capability. In implementations, the steps of the foregoing method embodiments can be completed by hardware integrated logic circuits in the processor or instructions in the form of software. The above-mentioned processor may be a general-purpose processor, a Digital Signal Processor (DSP), an Application Specific Integrated Circuit (ASIC), a Field Programmable Gate Array (FPGA) or other programmable logic device, discrete gate or transistor logic device, discrete hardware component. The methods, steps, and logical block diagrams disclosed in the embodiments of the present disclosure can be implemented or executed. The general-purpose processor may be a microprocessor or the processor may also be any conventional processor or the like. The steps of the methods disclosed in the embodiments of the present disclosure may be directly embodied as being executed and completed by a hardware decoding processor, or executed by a combination of hardware and software modules in the decoding processor. The software module can be located in a storage medium in the field, such as random access memory, flash memory, read-only memory, programmable read-only memory, or electrically erasable programmable memory, register. The storage medium is located in the memory, and the processor reads the information in the memory to perform the steps of the above methods in combination with hardware.

It can be understood that the memory in the embodiments of the present disclosure may be volatile memory or non-volatile memory, or may include both volatile and non-volatile memory. The non-volatile memory can be Read-Only Memory (ROM), Programmable ROM (PROM), Erasable PROM (EPROM), Electrically EPROM (EEPROM) or flash memory. The volatile memory may be a Random Access Memory (RAM), which is used as an external cache. By way of exemplary rather than limitation, many forms of RAM are available, such as Static RAM (SRAM), Dynamic RAM (DRAM), Synchronous DRAM (SDRAM), Double Data Rate SDRAM (DDR SDRAM), Enhanced SDRAM (ESDRAM), Synchlink DRAM (SLDRAM) ), or Direct Rambus RAM (DR RAM). It should be noted that the memory in the systems and methods described in the present disclosure is intended to include but not limited to these and any other suitable types of memory.

It should be understood that the foregoing memory is exemplary but not restrictive. For example, the memory in embodiments of the present disclosure may also be Static RAM (SRAM), Dynamic RAM (DRAM), Synchronous DRAM (SDRAM), Double Data Rate SDRAM (DDR SDRAM), Enhanced SDRAM (ESDRAM), Synchlink DRAM (SLDRAM), or Direct Rambus RAM (DR RAM), and so on. That is to say, the memory in embodiments of the present disclosure is intended to include but not limited to these and any other suitable types of memory.

An embodiment of the present disclosure also provides a computer-readable storage medium for storing computer programs.

According to embodiments, the computer-readable storage medium may be applied to the terminal device in embodiments of the present disclosure, and the computer programs cause a computer to perform the corresponding processes implemented by the terminal device in each method embodiment of the present disclosure. For brevity, repeated descriptions are omitted here.

The present disclosure provides a computer program product, including computer program instructions.

The computer program product may be applied to the terminal device in embodiments of the present disclosure, and the computer program instructions cause a computer to perform the corresponding processes implemented by the terminal device in each method embodiment of the present disclosure. For brevity, repeated descriptions are omitted here.

The present disclosure also provides a computer program.

The computer program may be applied to the terminal device in embodiments of the present disclosure, and when the computer program runs on a computer, the computer is caused to perform the corresponding processes implemented by the terminal device in each method embodiment of the present disclosure. For brevity, repeated descriptions are omitted here.

Those of ordinary skill in the art will appreciate that the exemplary units and algorithm steps described according to embodiments disclosed herein can be carried out by electronic hardware or a combination of electronic hardware and computer software. Whether the functions are implemented by hardware or software depends on particular applications and design constraints of the technical solutions. For each of the particular applications, a person skilled in the art can use different methods to implement the described functions, but such implementation should not be considered as beyond the scope of the present disclosure.

It may be clearly understood by those skilled in the art that details of specific operation procedures of the systems, devices and units can be found in the previous description regarding the method embodiments.

In the embodiments provided in the present disclosure, it should be understood that the disclosed systems, devices and methods may be implemented in other ways. For example, the device embodiments described above are merely illustrative. For example, the division of the units is only a kind of logical function division. In practice, other division manner may be used. For example, multiple units or components may be combined or integrated into another system, or some features may be ignored or not performed. In addition, the illustrated or discussed mutual coupling or direct coupling or communication connection may be indirect coupling or communication connection through some interfaces, devices or units, and may be in electrical, mechanical or other forms.

The units described as separated parts may or may not be physically separated, and the parts displayed as units may or may not be physical units, that is, the units may be located in one place, or may be distributed over multiple network units. Some or all of the units may be selected according to actual needs to achieve the objectives of the solutions in the embodiments.

In addition, the functional units in the embodiments of the present disclosure may be integrated in one processing unit, or the units may exist alone physically, or two or more units may be integrated in one unit.

The functions may also be stored in a computer-readable storage medium if being implemented in the form of a software functional unit and sold or used as an independent product. Based on such understanding, the essence of the technical solutions of the present disclosure, or the part contributing to the prior art or part of the technical solutions, may be embodied in the form of a software product. The computer software product is stored in a storage medium including a number of instructions such that a computer device (which may be a personal computer, a server, or a network device, etc.) performs all or part of steps of the method described in each of the embodiments of the present disclosure. The foregoing storage medium includes: any medium that is capable of storing program codes such as a USB disk, a mobile hard disk, a Read-Only Memory (ROM), a Random Access Memory (RAM), a magnetic disk or an optical disk, and the like.

The foregoing descriptions are merely exemplary embodiments of the present disclosure, but the protection scope of the present disclosure is not limited thereto. Any person skilled in the art can easily think of changes or substitutions within the technical scope of the present disclosure, and all the changes or substitutions should be covered by the protection scope of the present disclosure. Therefore, the protection scope of the present disclosure should be defied by the appended claims.

**Claims**

1. A sidelink, SL, communication method, implemented by a first terminal device, wherein the SL communication method comprises:

   acquiring (310) an indication for triggering a resource selection procedure for aperiodic transmission at a first time position;
   determining (330) a resource selection window, RSW, after the first time position, wherein the RSW comprises a time window for resource selection and at least part of a contiguous partial sensing, CPS, monitoring window, said determining (330) the RSW comprises: determining the RSW satisfying a second criterion, wherein the second criterion comprises that a time length of the CPS monitoring window is greater than or equal to a second threshold, and the second threshold is determined based on at least one of: a remaining packet delay budget, PDB; and a preset range of values; and
   performing (350) the resource selection procedure based on the time window for resource selection.

2. The method as claimed in claim 1, wherein said determining (330) the RSW further comprises at least one of:

   determining the RSW satisfying a first criterion, wherein the first criterion comprises that a time length of the time window for resource selection is greater than or equal to a first threshold; and
   determining the RSW satisfying a third criterion, wherein the third criterion comprises that an overlapped time length between the time window for resource selection and an SL discontinuous reception, DRX, active duration of a second terminal device is greater than or equal to a third threshold.

**3.** The method as claimed in claim 1, further comprising:
determining the first threshold based on a high layer parameter configured or pre-configured for the aperiodic transmission.

**4.** The method as claimed in claim 2, wherein said determining the RSW satisfying the second criterion comprises:

determining an end time position of the CPS monitoring window that is a processing time before first slot of the time window for resource selection; and
determining a start time position of the CPS monitoring window that is at least M slots before the first slot of the time window for resource selection or before the end time position of the CPS monitoring window, where M is determined based on a higher layer parameter configured or pre-configured for the aperiodic transmission.

**5.** The method as claimed in claim 4, wherein the processing time is equal to a sum of $T_{proc,0}$ and $T_{proc,1}$, where $T_{proc,0}$ and $T_{proc,1}$ are determined based on a sub-carrier spacing, SCS.

**6.** The method as claimed in claim 4, further comprising:
determining a value of $M$ based on at least one of:

a high layer parameter configured for the aperiodic transmission;
a remaining packet delay budget, PDB; and
a preset range of values.

**7.** The method as claimed in any one of claims 1-6, wherein said determining (330) the RSW comprises at least one of:

determining a start time position of the RSW according to a time length required by the first terminal device for SL transmission; and
determining an end time position of the RSW according to a remaining packet delay budget, PDB.

**8.** The method as claimed in claim 7, wherein said determining the start time position of the RSW comprises:
determining the start time position of the RSW in such a manner that a time length between the first time position and the start time position is smaller than or equal to the time length required by the first terminal device for SL transmission.

**9.** The method as claimed in claim 7, wherein said determining the end time position of the RSW comprises:
determining the end time position of the RSW in such a manner that a time length between the first time position and the end time position is smaller than or equal to the remaining PDB.

**10.** The method as claimed in any one of claims 1-9, wherein said performing (350) the resource selection procedure based on the time window for resource selection comprises:
initializing a candidate resource set based on a set of all candidate resources within the time window for resource selection.

**11.** The method as claimed in any one of claims 1-10, further comprising:
monitoring a set of consecutive slots in an SL resource pool within the CPS monitoring window, wherein the SL resource pool is not configured with a parameter or the parameter for the SL resource pool is configured as disabled, and the parameter is indicative of periodic resource reservation.

**12.** The method as claimed in claim 11, wherein the parameter comprises a higher layer parameter *"sl-MultiReserveResource"*.

**13.** A terminal device, comprising a processor and a memory configured to store a computer program, wherein the processor is used to call and run the computer program stored in the memory to perform the method according to any one of claims 1 to 12.

**14.** A chip, comprising: a processor configured to call and run a computer program stored in a memory to cause the terminal device of claim 13 in which the chip is installed to perform the method according to any one of claims 1 to 12.

**15.** A computer-readable storage medium configured to store a computer program, wherein the computer program is configured to cause a computer to perform the method according to any one of claims 1 to 12.

**Patentansprüche**

1.  Sidelink-Kommunikationsverfahren, SL-Kommunikationsverfahren, das durch eine erste Endgerätvorrichtung implementiert wird, wobei das SL-Kommunikationsverfahren Folgendes umfasst:

    Erfassen (310) einer Angabe zum Auslösen einer Betriebsmittelauswahlprozedur für die aperiodische Sendung bei einer ersten Zeitposition;
    Bestimmen (330) eines Betriebsmittelauswahlfensters, RSW, nach der ersten Zeitposition, wobei das RSW ein Zeitfenster für die Betriebsmittelauswahl und wenigstens einen Teil eines zusammenhängenden Teilerfassungs-Überwachungsfensters, CPS-Überwachungsfensters, umfasst, wobei das Bestimmen (330) des RSW Folgendes umfasst:

    Bestimmen, dass das RSW ein zweites Kriterium erfüllt, wobei das zweite Kriterium umfasst, dass eine Zeitdauer des CPS-Überwachungsfensters größer oder gleich einem zweiten Schwellenwert ist, und wobei der zweite Schwellenwert auf Basis wenigstens eines der Folgenden bestimmt wird: eines verbleibenden Paketverzögerungsbudgets, PDB; und eines im Voraus festgelegten Bereichs von Werten; und
    Ausführen (350) der Betriebsmittelauswahlprozedur auf Basis des Zeitfensters für die Betriebsmittelauswahl.

2.  Verfahren nach Anspruch 1, wobei das Bestimmen (330) des RSW ferner wenigstens eines der Folgenden umfasst:

    Bestimmen, dass das RSW ein erstes Kriterium erfüllt, wobei das erste Kriterium umfasst, dass eine Zeitdauer des Zeitfensters für die Betriebsmittelauswahl größer oder gleich einem ersten Schwellenwert ist; und
    Bestimmen, dass das RSW ein drittes Kriterium erfüllt, wobei das dritte Kriterium umfasst, dass eine überlappte Zeitdauer zwischen dem Zeitfenster für die Betriebsmittelauswahl und einer aktiven Dauer des diskontinuierlichen SL-Empfangs, DRX, einer zweiten Endgerätvorrichtung größer oder gleich einem dritten Schwellenwert ist.

3.  Verfahren nach Anspruch 1, das ferner Folgendes umfasst:
    Bestimmen des ersten Schwellenwerts auf Basis eines Parameters einer höheren Schicht, der für die aperiodische Sendung konfiguriert oder vorkonfiguriert ist.

4.  Verfahren nach Anspruch 2, wobei das Bestimmen, dass das RSW das zweite Kriterium erfüllt, Folgendes umfasst:

    Bestimmen einer Endzeitposition des CPS-Überwachungsfensters, das eine Verarbeitungszeitdauer vor dem ersten Schlitz des Zeitfensters für die Betriebsmittelauswahl ist; und
    Bestimmen einer Anfangszeitposition des CPS-Überwachungsfensters, die wenigstens M Schlitze vor dem ersten Schlitz des Zeitfensters für die Betriebsmittelauswahl oder vor der Endzeitposition des CPS-Überwachungsfensters ist, wobei M auf Basis eines Parameters einer höheren Schicht, der für die aperiodische Sendung konfiguriert oder vorkonfiguriert ist, bestimmt wird.

5.  Verfahren nach Anspruch 4, wobei die Verarbeitungszeitdauer gleich einer Summe von $T_{proc,0}$ und $T_{proc,1}$ ist, wobei $T_{proc,0}$ und $T_{proc,1}$ auf Basis eines Zwischenträgerabstands, SCS, bestimmt werden.

6.  Verfahren nach Anspruch 4, wobei das Verfahren ferner Folgendes umfasst:
    Bestimmen eines Werts von M auf Basis wenigstens eines der Folgenden:

    eines Parameters einer höheren Schicht, der für die aperiodische Sendung konfiguriert ist;
    eines verbleibenden Paketverzögerungsbudgets, PDB; und
    eines im Voraus festgelegten Bereichs von Werten.

7.  Verfahren nach einem der Ansprüche 1-6, wobei das Bestimmen (330) des RSW wenigstens eines der Folgenden umfasst:

    Bestimmen einer Anfangszeitposition des RSW in Übereinstimmung mit einer Zeitdauer, die für die erste Endgerätvorrichtung für die SL-Sendung erforderlich ist; und
Bestimmen einer Endzeitposition des RSW in Übereinstimmung mit einem verbleibenden Paketverzögerungsbudget, PDB.

8. Verfahren nach Anspruch 7, wobei das Bestimmen der Anfangszeitposition des RSW Folgendes umfasst:
Bestimmen der Anfangszeitposition des RSW in einer Weise, dass eine Zeitdauer zwischen der ersten Zeitposition und der Anfangszeitposition kleiner oder gleich der Zeitdauer, die für die erste Endgerätvorrichtung für die SL-Sendung erforderlich ist, ist.

9. Verfahren nach Anspruch 7, wobei das Bestimmen der Endzeitposition des RSW Folgendes umfasst:
Bestimmen der Endzeitposition des RSW in einer Weise, dass eine Zeitdauer zwischen der ersten Zeitposition und der Endzeitposition kleiner oder gleich dem verbleibenden PDB ist.

10. Verfahren nach einem der Ansprüche 1-9, wobei das Ausführen (350) der Betriebsmittelauswahlprozedur auf Basis des Zeitfensters für die Betriebsmittelauswahl Folgendes umfasst:
Initialisieren eines Kandidatenbetriebsmittelsatzes auf Basis eines Satzes aller Kandidatenbetriebsmittel innerhalb des Zeitfensters für die Betriebsmittelauswahl.

11. Verfahren nach einem der Ansprüche 1-10, das ferner Folgendes umfasst:
Überwachen eines Satzes aufeinanderfolgender Schlitze in einem SL-Betriebsmittel-Pool innerhalb des CPS-Überwachungsfensters, wobei der SL-Betriebsmittel-Pool nicht mit einem Parameter konfiguriert ist oder der Parameter für den SL-Betriebsmittel-Pool als gesperrt konfiguriert ist und wobei der Parameter eine periodische Betriebsmittelreservierung angibt.

12. Verfahren nach Anspruch 11, wobei der Parameter einen Parameter einer höheren Schicht "*sl-MultiReserveResource*" umfasst.

13. Endgerätvorrichtung, die einen Prozessor und einen Speicher, der zum Speichern eines Computerprogramms konfiguriert ist, umfasst, wobei der Prozessor verwendet wird, um ein in dem Speicher gespeichertes Computerprogramm aufzurufen und auszuführen, um das Verfahren nach einem der Ansprüche 1 bis 12 auszuführen.

14. Chip, der Folgendes umfasst: einen Prozessor, der konfiguriert ist, ein in einem Speicher gespeichertes Computerprogramm aufzurufen und auszuführen, um zu veranlassen, dass die Endgerätvorrichtung nach Anspruch 13, in die der Chip eingebaut ist, das Verfahren nach einem der Ansprüche 1 bis 12 ausführt.

15. Computerlesbares Speichermedium, das konfiguriert ist, ein Computerprogramm zu speichern, wobei das Computerprogramm konfiguriert ist zu veranlassen, dass ein Computer das Verfahren nach einem der Ansprüche 1 bis 12 ausführt.

**Revendications**

1. Procédé de communication en liaison latérale, SL, mis en œuvre par un premier dispositif terminal, le procédé de communication en SL comprenant :

l'acquisition (310) d'une indication de déclenchement d'une procédure de sélection de ressources pour une transmission apériodique à une première position temporelle ;
la détermination (330) d'une fenêtre de sélection de ressources, RSW, après la première position temporelle, la RSW comprend une fenêtre temporelle pour la sélection de ressources et au moins une partie d'une fenêtre de surveillance de détection partielle contiguë, CPS,
ladite détermination (330) de la RSW comprenant : la détermination que la RSW satisfait à un deuxième critère, le deuxième critère comprenant le fait qu'une durée de la fenêtre de surveillance CPS est supérieure ou égale à un deuxième seuil, et le deuxième seuil étant déterminé sur la base d'au moins l'un des éléments suivants : un budget de retard de paquet, PDB, restant ; et une plage prédéfinie de valeurs ; et
la réalisation (350) de la procédure de sélection de ressources sur la base de la fenêtre temporelle pour la sélection de ressources.

2. Procédé selon la revendication 1, dans lequel ladite détermination (330) de la RSW comprend en outre au moins l'une des opérations suivantes :

la détermination que la RSW satisfait à un premier critère, le premier critère comprenant le fait qu'une durée de la fenêtre temporelle pour la sélection de ressources est supérieure ou égale à un premier seuil ; et
la détermination que la RSW satisfait à un troisième critère, le troisième critère comprenant le fait qu'une durée de chevauchement entre la fenêtre temporelle pour la sélection de ressources et une durée active de réception discontinue, DRX, en SL d'un deuxième dispositif terminal est supérieure ou égale à un troisième seuil.

3. Procédé selon la revendication 1, comprenant en outre :
la détermination du premier seuil sur la base d'un paramètre de couche supérieure configuré ou préconfiguré pour la transmission apériodique.

4. Procédé selon la revendication 2, dans lequel ladite détermination que la RSW satisfait au deuxième critère comprend :

la détermination d'une position temporelle de fin de la fenêtre de surveillance CPS qui est un temps de traitement avant un premier slot de la fenêtre temporelle pour la sélection de ressources ; et
la détermination d'une position temporelle de début de la fenêtre de surveillance CPS qui est d'au moins M slots avant le premier slot de la fenêtre temporelle pour la sélection de ressources ou avant la position temporelle de fin de la fenêtre de surveillance CPS, M étant déterminé sur la base d'un paramètre de couche supérieure configuré ou préconfiguré pour la transmission apériodique.

5. Procédé selon la revendication 4, dans lequel le temps de traitement est égal à une somme de $T_{proc,0}$ et de $T_{proc,1}$, $T_{proc,0}$ et $T_{proc,1}$ étant déterminés sur la base d'un espacement de sous-porteuses, SCS.

6. Procédé selon la revendication 4, comprenant en outre :
la détermination d'une valeur de M sur la base d'au moins l'un des éléments suivants :

un paramètre de couche supérieure configuré pour la transmission apériodique ;
un budget de retard de paquet, PDB, restant ; et
une plage prédéfinie de valeurs.

7. Procédé selon l'une quelconque des revendications 1 à 6, dans lequel ladite détermination (330) de la RSW comprend au moins l'une des opérations suivantes :

la détermination d'une position temporelle de début de la RSW selon une durée requise par le premier dispositif terminal pour la transmission en SL ; et
la détermination d'une position temporelle de fin de la RSW selon un budget de retard de paquet, PDB, restant.

8. Procédé selon la revendication 7, dans lequel ladite détermination de la position temporelle de début de la RSW comprend :
la détermination de la position temporelle de début de la RSW de sorte qu'une durée entre la première position temporelle et la position temporelle de début soit inférieure ou égale à la durée requise par le premier dispositif terminal pour la transmission en SL.

9. Procédé selon la revendication 7, dans lequel ladite détermination de la position temporelle de fin de la RSW comprend :
la détermination de la position temporelle de fin de la RSW de sorte qu'une durée entre la première position temporelle et la position temporelle de fin soit inférieure ou égale au PDB restant.

10. Procédé selon l'une quelconque des revendications 1 à 9, dans lequel ladite réalisation (350) de la procédure de sélection de ressources sur la base de la fenêtre temporelle pour la sélection de ressources comprend :
l'initialisation d'un ensemble de ressources candidates sur la base d'un ensemble de toutes les ressources candidates au sein de la fenêtre temporelle pour la sélection de ressources.

11. Procédé selon l'une quelconque des revendications 1 à 10, comprenant en outre :
la surveillance d'un ensemble de slots consécutifs dans un pool de ressources en SL au sein de la fenêtre de surveillance CPS, le pool de ressources en SL n'étant pas configuré avec un paramètre ou le paramètre pour le pool de ressources en SL étant configuré comme désactivé, et le paramètre indiquant une réservation de ressources périodique.

**12.** Procédé selon la revendication 11, dans lequel le paramètre comprend un paramètre de couche supérieure "*sl-MultiReserveResource*".

**13.** Dispositif terminal, comprenant un processeur et une mémoire configurée pour stocker un programme d'ordinateur, le processeur étant utilisé pour appeler et exécuter le programme d'ordinateur stocké dans la mémoire afin de réaliser le procédé selon l'une quelconque des revendications 1 à 12.

**14.** Puce, comprenant : un processeur configuré pour appeler et exécuter un programme d'ordinateur stocké dans une mémoire afin d'amener le dispositif terminal de la revendication 13, dans lequel la puce est installée, à réaliser le procédé selon l'une quelconque des revendications 1 à 12.

**15.** Support de stockage lisible par ordinateur configuré pour stocker un programme d'ordinateur, le programme d'ordinateur étant configuré pour amener un ordinateur à réaliser le procédé selon l'une quelconque des revendications 1 à 12.

FIG. 1

FIG. 2

Acquire, at a first time position, an indication for triggering a resource selection procedure for aperiodic transmission ~ 310

Determine an RSW after the first time position, where the RSW includes a time window for resource selection and at least part of a CPS monitoring window ~ 330

Perform the resource selection procedure based on the time window for resource selection ~ 350

FIG. 3

$n+T_A$

$n+T_B$

CPS Monitoring
Window

$T_{proc,0} + T_{proc,1}$

Remaining RSW

$T_{2min}$

$n$

Resource selection window (RSW)

PDB

$n+T_1$

$n+T_2$

FIG. 4

←Rx-UE's SL-DRX active time→

←$N$→

$n+T_A$

$n+T_B$

CPS Monitoring
Window

$T_{proc,0} + T_{proc,1}$

Remaining RSW

$T_{2min}$

$n$

Resource selection window (RSW)

PDB

$n+T_1$

$n+T_2$

FIG. 5

Determine at least one first RSW satisfying the first criterion — 601

603

Determine, among the at least one first RSW, a second RSW satisfying the second criterion as the RSW

Determine, if no RSW in the at least one first RSW satisfies the second criterion, one of the at least one first RSW as the RSW — 605

FIG. 6

Start

701

Determine at least one third RSW satisfying the third criterion

Determine, if no RSW satisfies the third criterion, the RSW based on whether the first criterion and the second criterion can be satisfied in the second priority order — 703

705

Determine, among the at least one third RSW, at least one first RSW satisfying the first criterion

Determine, if no RSW in the at least one third RSW satisfies the first criterion, one of the at least one third RSW as the RSW — 707

709

Determine, among the at least one first RSW, a second RSW satisfying the second criterion as the RSW

Determine, if no RSW in the at least one first RSW satisfies the second criterion, one of the at least one first RSW as the RSW — 711

FIG. 7

Determine whether the SL DRX active duration of the second terminal device is available to the first terminal device — 801

Yes

No

803

Determine the RSW based on whether the first criterion, the second criterion and the third criterion can be satisfied in the first priority order

Determine the RSW based on whether the first criterion and the second criterion can be satisfied in the second priority order — 805

FIG. 8

First Terminal Device 900

Acquiring Module 910

Determining Module 930

Processing module 950

FIG. 9

terminal device 1000

memory 1020

processor 1010

transceiver 1030

FIG. 10

chip 1100

input interface 1130

processor 1110

memory 1120

output interface 1140

FIG. 11

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63250667

**Non-patent literature cited in the description**

- **OPPO**. FL summary for AI 8.11.1.1 - resource allocation for power saving (EOM). *3GPP TSG RAN WG1 #106-E, R1-2108265*, 27 August 2021

- 3rd Generation Partnership Project; Technical Specification Group Radio Access Network; NR; Physical layer procedures for data (Release 16). *3GPP STANDARD; TECHNICAL SPECIFICATION; 3GPP TS 38.214, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE*, 30 June 2021, vol. RAN WG1 (V16.6.0), 1-172